# EUROPEAN PATENT APPLICATION

(11) **EP 1 681 179 A1**
(43) Date of publication of application: **19.07.2006**
(21) Application number: 05112342.0
(22) Date of filing: 16.12.2005
(51) Int. Cl.: B60C 23/04

(54) **Apparatus for measuring the parameters of a tire, installable on the rim of a wheel**

(30) Priority: 13.01.2005 IT MO20050003
(71) Applicant: Meta System S.p.A., 42100 Reggio Emilia (IT)
(72) Inventor: Simonazzi, Giuseppe, 42100, Reggio Emilia (IT)
(74) Representative: Brogi, Graziano

(57) **Abstract**

An apparatus for measuring the parameters of a tire which can be fixed easily to a wheel rim (10) of the tire, the apparatus comprising a pressure valve (20) arranged in a hole of the wheel rim (10) of the tire and a measurement device (30) which is fixed to the pressure valve (20) inside the tire, the pressure valve (20) having an internal thread (25) which is adapted to receive a perforated screw (40) which fixes the measurement device (30) to the pressure valve (20).

## Description

The present invention relates to an apparatus for measuring the parameters of a tire, which can be fixed easily to the wheel rim of the tire.

In the field of the automatic measurement of parameters of the tires of a vehicle, such as for example the internal pressure and temperature of said tires, pressure monitoring devices which reside permanently inside the tire are generally used. These devices collect data related to various parameters and conditions of a tire by means of appropriate electronic sensors. In particular, the pressure sensor is connected generally to a pressure valve or is integrated in an apparatus which also comprises such a valve.

Fitting the devices for monitoring these parameters inside the tire of a vehicle has always been a substantial technical problem, since the device must remain fixed despite the stress and vibrations to which it is subjected during the motion of the vehicle. Moreover, the device must be electrically insulated.

Several solutions are currently already known which allow to fit such a device inside a tire in a fixed and electrically insulated manner. For example, EP-1195272 discloses a temperature and pressure sensing device which is fixed inside the tire to an element made of vulcanized rubber which is coupled directly to the liner of the tire. This arrangement of the sensing device, while offering the advantage of allowing precise measurement of the temperature of the tread of the tires, is disadvantageous, since the device is, albeit indirectly, in contact with one of the parts that is most exposed to impacts during the motion of the vehicle, i.e., the tread itself.

If such a particular application is not required and the sensor is instead suitable to detect only the pressure or, in addition, also the temperature inside the tire, it is instead preferable to fix the monitoring device to the wheel rim, thus reducing the probability of damage or loosening of the sensor. Moreover, as regards pressure measurement, this arrangement is advantageous, since the measurement device can be placed proximate to the pressure valve in order to optionally actuate it mechanically or electronically.

Currently, this type of fixing is performed in different ways. For example, it is known to use a metallic band, which surrounds the wheel rim inside the tire and to which the measurement device is fixed. As an alternative, the sensor can be accommodated in a recess of the wheel rim which is located at the level of the inlet of the pressure valve and forms a chamber suitable to receive and protect the sensor.

Although these systems achieve a rather reliable result in fixing the measurement device inside the tire and therefore ensure that the sensors that it contains are not damaged by impacts or vibrations throughout the life of the tire, they require, during tire fitting, the involvement of wheel manufacturers, which are required to provide either a band for fastening the measurement device or, as an alternative, a suitable recess for accommodating said device. Both the band and the recess must be such as to allow the engagement or accommodation of the monitoring device, and therefore they cannot be independent of the structure of this device but must be provided specifically. Further, additional means suitable to ensure the electrical insulation of the device are necessary.

Another type of fixing of a known measurement device describes pressure sensors in which the enclosure is provided with a supporting plate, which can be fixed on one side to the pressure valve and on the other side to the coupling between the wheel rim and the tire. This system, too, ensures reliable fixing but requires, depending on the type of wheel rim used, that the receptacles of the pressure sensors and the corresponding plates be shaped appropriately. Further, such a system requires a complicated and generally time-consuming assembly, since it is necessary both to fix the plate around the base of the valve and to lock the other end of the plate between the tire and the wheel rim.

Another solution is disclosed in WO 03/089261, in which a valve and a pressure sensor are integrated in a single body, thus allowing reliable fixing of the sensor even at high travel speeds. Fixing occurs by means of a female thread which is screwed to the base of the portion of the valve that protrudes from the tire. However, such an integrated device has limitations, since in case of failure of the sensor alone or of the valve alone it is necessary to replace the entire apparatus, therefore requiring high maintenance costs.

Finally, other devices are known which, by way of elastic elements, fasten the enclosure of the pressure sensor directly to the base of the valve inside the tire. The valve-sensor system thus preassembled is finally fitted to the wheel rim, making the stem of the valve protrude from a hole provided in the wheel rim and locking it by screwing from the outside. Although this solution allows to separate the valve from the measurement device, for example in case of malfunction of one of the components, it requires a time-consuming procedure in multiple steps in order to fit the system to the wheel rim, since it is necessary to preassemble the two components. Moreover, in order to ensure the reliability of the connection of the two components by means of an elastic element, such elastic element must be made of special and generally expensive materials.

Finally, wheel rims are generally supplied with a rubber valve which is fitted beforehand during production. The solutions in which the measurement devices are fastened to particular and specifically-adapted valves have the drawback of having to replace the supplied rubber valve with the specifically-provided valve. This entails an inefficiency in the production chain and consequent higher costs due to the necessary discarding of new and functioning elements.

The aim of the present invention is to eliminate the drawbacks noted above in known types of device for measuring the parameters of a tire of a vehicle by providing a device whose assembly to the tire requires only simple operations and offers reliable fixing.

Another object of the present invention is to provide a device for measuring the parameters of a tire which is electrically insulated from the devices of the vehicle.

Another object of the present invention is to provide a device for measuring the parameters of a tire which is of the universal type, i.e., can be fitted to any type of wheel rim.

Another object of the present invention is to provide a device for measuring the parameters of a tire which offers competitive costs for production, installation and maintenance.

This aim and these and other obj ects that will become better apparent hereinafter are achieved by the apparatus for measuring the parameters of a tire according to the invention, which comprises a pressure valve arranged in a hole of the wheel rim of the tire and a measurement device which is fixed to the pressure valve inside the tire and is characterized in that the pressure valve has an internal thread adapted to receive a perforated screw which fixes the measurement device to the pressure valve.

Conveniently, the pressure valve is a rubber valve.

Advantageously, the enclosure of the measurement device is provided with a hole which is suitable to receive the perforated screw.

This aim is also achieved by a method for fitting to a wheel rim an apparatus for measuring the parameters of a tire, which comprises a pressure valve arranged in a hole of the wheel rim and a measurement device, which comprises the steps of threading internally said pressure valve, forming an internal thread, and fixing said measurement device to said pressure valve by means of a perforated screw screwed into said internal thread.

Further characteristics and advantages of the invention will become better apparent from the following detailed description of a preferred but not exclusive embodiment of the device for measuring the parameters of a tire of a vehicle, illustrated by way of non-limiting example in the accompanying drawing, wherein:
Figure 1 is a sectional view of the valve element, of the perforated screw and of part of the enclosure of the measurement device;
Figure 2 is a sectional view of the system for fixing the measurement device to a wheel rim;

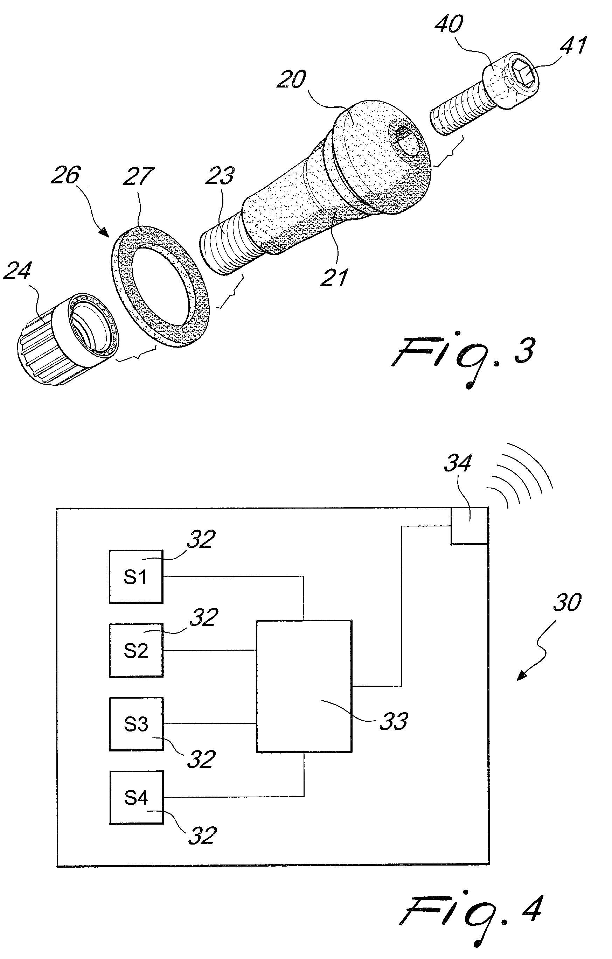

Figure 3 is an exploded perspective view of the valve and of the perforated screw; and
Figure 4 is a block diagram of the measurement device.

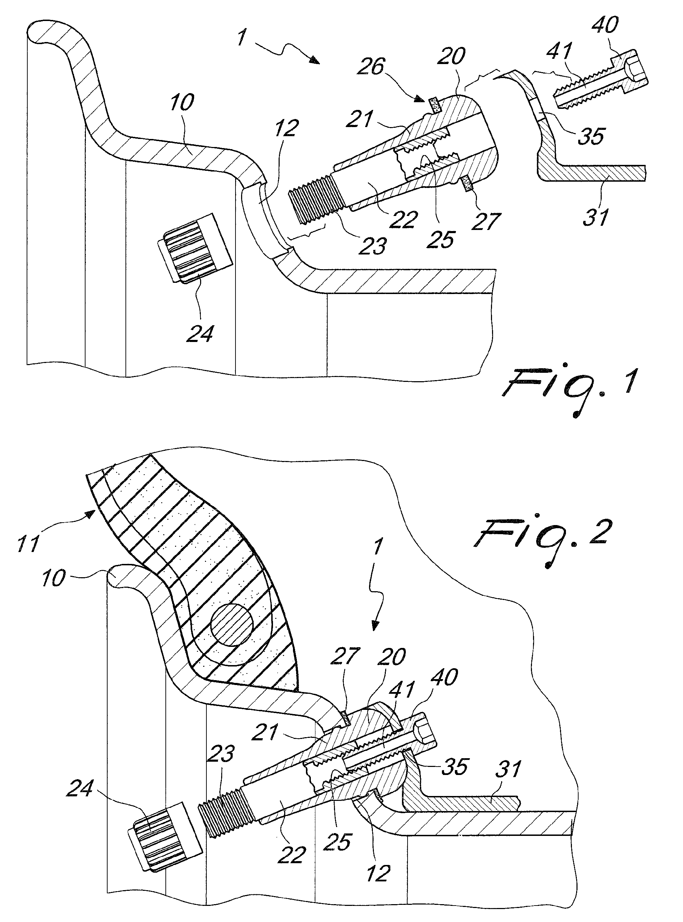

As shown schematically in Figure 1, the apparatus 1 comprises a valve 20, a measurement device 30, for example a pressure sensor, and a perforated screw 40, by means of which the measurement device 30 is fixed to the valve 20.

Preferably, the valve 20 is a rubber valve or another type of valve with which a wheel rim 10 is provided during production.

The valve 20 comprises a body 21, generally made of rubber or similar material, and a perforated metal core 22, which constitutes the hole of the pressure valve and through which air can be introduced in the tire.

Generally, the metal core 22 of the valve 20, as provided with the wheel rim, has at a first end an external thread 23 on which a protective cap 24 is screwed.

With reference to Figure 2, it can be seen that in order to allow the screwing of the perforated screw 40 and thus fix firmly the measurement device 30 to the valve 20, the valve 20 must be modified so that the other end is threaded internally and thus has an internal thread 25.

The valve body 21 is substantially frustum-shaped and has, at the end having a larger cross-section, a tip shaped like a hemispherical dome. The hemispherical dome-shaped tip corresponds to the portion of the valve 20 which, when the valve 20 is fixed to the wheel rim 10 as shown in Figure 2, faces internally the tire 11, while the frustum-shaped body portion remains outside the tire 11.

Further, the valve body 21 is provided with a groove 26, which is arranged between the frustum-shaped portion and the hemispherical dome-shaped tip. The circular groove 26 is suitable to accommodate with an interlocking coupling the edge of the hole 12 provided in the wheel rim 10 in order to receive the valve 20, keeping the valve 20 rigidly fixed to the wheel rim 10. An elastic ring 27 is further arranged in the circular groove 26 in order to ensure a hermetic seal between the valve 20 and the wheel rim 10.

In order to be fixed to the valve 20 provided on the wheel rim 10, the enclosure 31 of the measurement device 30 is provided with a hole 35, which is suitable to receive the perforated screw 40. The hole 35 of the enclosure 31 is preferably elongated so as to allow to fix the measurement device 30 to the valve 20 with the most suitable inclination. The inclination may vary depending on the shape of the enclosure 31 of the measurement device and of the particular wheel rim 10.

The screw 40 in turn has a hole 41, so that once it has been screwed to the valve 20 the hole of the valve through which air can be introduced in the tire is not blocked.

As shown schematically in Figure 4, the device 30 for measuring the state of the tires is provided with a plurality of sensors 32 in order to measure for example the pressure, temperature, acceleration, battery voltage level or other status parameters of the tire. Periodically, the sensors 32 detect the current values of the physical parameters of the tire, such as for example pressure and temperature, and send them to a processing unit 33, which processes the received information, assessing whether the parameters are within the allowed values. This assessment occurs by taking into account the status of the vehicle, i.e., whether it is moving or stationary.

If the outcome is negative, the processing unit 33 generates a warning signal, which is sent to the control unit of the machine (not shown) by means of the interface 34 for sending signals wirelessly.

If the valve 20 is a rubber valve, the measurement device 30 requires no electrical insulation, since it is insulated by means of the valve itself. If the standard pressure valve 20 of the wheel rims is not made of rubber, it is instead necessary to provide suitable insulation means.

The measurement device is fitted to the wheel rim according to the following method.

The wheel rim 10 is provided with a valve 20, generally made of rubber, which has a metal core 22 which lacks the internal thread 25. First of all, the screw 20 is therefore threaded internally so as to be able to receive the screw 40.

The measurement device 30 is then fixed to the valve 20 by screwing into the thread 25 the perforated screw 40 through the hole 35 provided in the enclosure 31 of the measurement device 30. The measurement device 30 can be fixed with the inclination most suited to its particular structure with respect to the shape of the wheel rim 10.

In practice it has been found that the apparatus according to the invention thus described can ensure a stable and safe fixing of the measurement device 30, which ensures that the sensors 32 contained therein are not damaged by impacts or vibrations throughout the life of the tire.

Further, there is no need to adapt the wheel rims or discard the valves with which standard wheel rims are provided, since by means of a simple modification it is possible to use the valves with which the wheel rims are provided as standard.

Moreover, it has been ascertained that if valves made of a rubber-like material or the like are used, the apparatus according to the invention thus described ensures electrical insulation of the measurement device without using specifically-provided means.

Moreover, it has been found that the apparatus according to the invention allows a method for fitting the measurement device which is simple and optimized both in terms of times and in terms of costs.

The invention thus conceived is susceptible of numerous modifications and variations, all of which are within the scope of the appended claims. Thus, for example, the shape of the valve 20, with particular reference to the hemispherical dome, can be different according to the requirements and the type of valve, so long as it is suitable to firmly fix the valve to the wheel rim and to bear the coupling of a measurement device 30.

Likewise, the person skilled in the art understands without effort that the connection system provided by threading complementarily the valve 20 in order to allow the screwing of the screw 40 can be replaced in a fully equivalent manner by a corresponding engagement system, for example simply of the push-fit type, if one wishes to use a non-threaded element instead of the screw 40. For this reason, the term "screw" used in this text must be understood as any rod-like element which can engage in a sufficiently firm and reliable manner, depending on the requirements, in the tire valve body. Likewise, the "thread" of the valve must be understood as the provision or presence of an element suitable to mate with the rod-like element 40 so as to keep the device 30 in a fixed position with respect to the valve 20.

Finally, the materials used, as well as the dimensions, may be any according to requirements, and all the details may be replaced with other elements.

Therefore, the scope of the protection of the appended claims must not be limited by the illustrations or by the preferred embodiments illustrated in the description by way of example, but rather the claims must comprise all the characteristics of patentable novelty that reside within the present invention, including all the characteristics that would be treated as equivalent by the person skilled in the art.

The disclosures in Italian Patent Application No. MO2005A000003 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for measuring the parameters of a tire which can be fitted on a wheel rim (10), comprising a pressure valve (20) arranged in a hole of the wheel rim (10) and a measurement device (30) which is fixed to said pressure valve (20) inside the tire, **characterized in that** said pressure valve (20) has an internal thread (25) adapted to receive a perforated screw (40) which fixes said measurement device (30) to said pressure valve (20).

2. The apparatus for measuring the parameters of a tire according to claim 1, **characterized in that** said pressure valve (20) is a rubber valve.

3. The apparatus for measuring the parameters of a tire according to any one of the preceding claims, **characterized in that** said pressure valve (20) is a standard valve.

4. The apparatus for measuring the parameters of a tire according to any one of the preceding claims, **characterized in that** the enclosure (31) of said measurement device (30) is provided with a hole (35), which is suitable to receive said perforated screw (40).

5. The apparatus for measuring the parameters of a tire according to claim 4, **characterized in that** said hole (35) is an elongated hole.

6. The apparatus for measuring the parameters of a tire according to any one of the preceding claims, **characterized in that** said measurement device (30) comprises a plurality of sensors (32), which are connected to a processing unit (33) for evaluating the values detected by said plurality of sensors (32).

7. The apparatus for measuring the parameters of a tire according to one of the preceding claims, **characterized in that** said measurement device (30) comprises an interface for sending signals wirelessly (34).

8. The apparatus for measuring the parameters of a tire according to claim 6 or 7, **characterized in that** said plurality of sensors (32) is suitable to detect values of one or more among the following parameters:
a) pressure;
b) temperature;
c) acceleration; and
d) battery voltage level.

9. A method for fitting to a wheel rim an apparatus for measuring the parameters of a tire, which comprises a pressure valve (20) arranged in a hole of the wheel rim (10) and a measurement device (30), said method comprising the steps of:
a) threading internally said pressure valve (20), producing an internal thread (25); and
b) fixing said measurement device (30) to said pressure valve (20) by means of a perforated screw (40) which is screwed into said internal thread (25).

10. A method for fitting to a wheel rim an apparatus for measuring the parameters of a tire according to claim 9, **characterized in that** said measurement device (30) is provided with a hole (35) which is suitable to receive said perforated screw (40).
